# EUROPÄISCHE PATENTANMELDUNG

(11) **EP 0 731 515 A1**
(43) Veröffentlichungstag der Anmeldung: **11.09.1996**
(21) Anmeldenummer: 96200489.1
(22) Anmeldetag: 26.02.1996
(51) Int. Cl.: H01L 41/09, H02N 2/10

(54) **Elektrischer Rotationsmotor, dessen Läufer mittels Ultraschallschwingungen angetrieben wird**

(30) Priorität: 07.03.1995 DE 19507996
(71) Anmelder: Philips Patentverwaltung GmbH, 22335 Hamburg (DE); Philips Electronics N.V., 5621 BA Eindhoven (NL)
(72) Erfinder: Schaaf, U., Dr., D-22335 Hamburg (DE); Flisikowski, Peter, D-22335 Hamburg (DE); Knops, Alwin, D-22335 Hamburg (DE); Meys, Joachim, D-22335 Hamburg (DE)
(74) Vertreter: von Laue, Hanns-Ulrich, Dipl.-Ing.

(57) **Zusammenfassung**

Die Erfindung bezieht sich auf einen elektrischen Rotationsmotor, dessen Rotor (1b) mittels Ultraschallschwingungen angetrieben wird von piezoelektrischen Schwingelementen, die mittels hochfrequenter elektrischre Schwingungen in eine Resonanzschwingung versetzt werden und diese Schwingungen auf eine Anzahl elastischer Lamellen (19) übertragen, gegen deren freie Enden eine Reibfläche (20) des Rotors gedrückt wird, wobei die einzelnen Lamellen (19) unter einem Anstellwinkel α zur Senkrechten auf dem kontaktierenden Teil der Reibfläche (20) angestellt sind, wobei der Anstellwinkel α so gewählt ist, daß in Vorschubrichtung eine Stockwirkung auftritt, bei der sich die Lamellen (19) durch einen Schneideneffekt in die Reibfläche (20) einhaken, sodaß bei der Vorschubbewegung keine Relativbewegung zwischen Lamellenschneiden (19a) und Reibfläche (20) auftritt.

## Beschreibung

Die Erfindung bezieht sich auf einen elektrischen Rotationsmotor, dessen Rotor mittels Ultraschallschwingungen angetrieben wird von piezoelektrischen Schwingelementen, die mittels hochfrequenter elektrischer Schwingungen in eine Resonanzschwingung versetzt werden und diese Schwingungen auf eine Anzahl elastischer Lamellen übertragen, gegen deren freie Enden eine Reibfläche des Rotors gedrückt wird, wobei die einzelnen Lamellen unter einem Anstellwinkel α zur Senkrechten auf dem kontaktierenden Teil der Reibfläche angestellt sind.

Aus der DE 32 13 275 C2 ist ein Rotationsmotor bekannt, bei dem in einem piezoelektrischen Schwingelement Ultraschallschwingungen erzeugt werden, die mittels hochfrequenter, elektrischer Signale in eine Resonanzschwingung versetzt werden. Durch eine Reihe elastischer Lamellen, die unter einem Anstellwinkel α gegen die Normale auf der Reibfläche des Rotors gedrückt werden, werden die Ultraschallschwingungen in eine unidirektionale Rotation des Läufers umgewandelt. Dabei wird der Läufer von Reibungskräften angetrieben, die zwischen den Lamellenenden und der Reibfläche des Rotors wirken.

Aus der EP 0 313 130 A2 ist des weiteren ein elektrischer Rotationsmotor bekannt, bei dem der Anstellwinkel α etwa gleich oder etwas größer als der Haftreibungswinkel ist, der sich wie folgt definiert als
γ Haftreibung = arctgµ,
wobei µ der Reibungskoeffizient zwischen den Vortriebsstiften und der Reibfläche ist. Es hat sich gezeigt, daß diese Motoren hinsichtlich ihres Wirkungsgrades und ihres abgebbaren Momentes unbefriedigend sind.

Es ist Aufgabe der Erfindung, einen Motor der eingangs erwähnten Art zu schaffen, der sich durch einen hohen Wirkungsgrad und ein hohes Moment auszeichnet.

Die gestellte Aufgabe ist erfindungsgemäß dadurch gelöst, daß der Anstellwinkel α so gewählt ist, daß in Vorschubrichtung eine Stockwirkung auftritt, bei der sich die Lamellen durch einen Schneideneffekt in die Reibfläche einhaken, sodaß bei der Vorschubbewegung keine Relativbewegung zwischen Lamellenschneiden und Reibfläche auftritt.

Die Stockwirkung macht es möglich, sehr hohe Drehmomente zu erzielen und einen sehr hohen Motorwirkungsgrad zu erreichen, weil keine Reibungsverluste auftreten. Bei der früher geübten Betrachtung des Haftreibungswinkels wurde die Stockwirkung bewußt vermieden.

Nach einer weiteren Ausgestaltung der Erfindung ist vorgesehen, daß der Anstellwinkel Alpha derart gewählt ist, daß er gleich oder kleiner ist als der Stockwinkel Beta, der infolge des Schneideneffektes der Lamellen zwischen 15 und 45° liegt.

Nach einer weiteren Ausgestaltung der Erfindung ist vorgesehen, daß die elastischen Lamellen an ihrem Ende, welches mit der Reibfläche des Rotors in Kontakt steht, so dünn ausgebildet ist, daß zur Erzielung der Stockwirkung ein einseitig gerichteter Schneideneffekt entsteht. Vorzugsweise ist vorgesehen, daß das auf die Reibfläche gerichtete Lamellenende 0,1 mm und dünner ausgebildet ist. Auf diese Weise wird ein Schneideffekt erzeugt, der etwa so wirkt, als wäre eine Messerschneide schräg gegen eine Fläche angestellt. Dies hat zur Folge, daß die Lamellenenden in der Schwingungsphase, in der sie sich in Vorwärtsrichtung bewegen, fest und ohne Schlupf an der Reibfläche des Rotors angreifen. Bei der Rückwartsbewegung der Lamellenenden ist der Schneideneffekt nicht wirksam, und die Lamellen können zurückschwingen, wobei sie nur durch die normale Coulomb-Reibung (F_{c}=F_{⊥}.µ) gehemmt werden. Da die Coulomb-Reibungskräfte in Rückwärtsrichtung kleiner sind als die Schneiderkräfte in Vorwärtsrichtung, entsteht eine zeitlich mittlere Nettokraft in Richtung der Neigung der Lamellen, die den Rotor vorwärts treibt. Aufgrund der Massenträgheit des Rotors werden die schnellen Kraftschwankungen durch die Oszillationen der Lamellen geglättet, und der Rotor rotiert auffallend ruhig und gleichmäßig.

Der Schneideneffekt macht sich im passiven Zustand des Motors dadurch bemerkbar, daß sich der Rotor trotz des Aufbringens sehr hoher Momente nicht in Rückwärtsrichtung bewegen kann, also klemmt. Dies ist auch der Fall, wenn die Lamellen flacher als der Haftreibungswinkel γ gegen die Reibefläche angestellt sind. Unterhalb des Haftreibungswinkels tritt in jedem Fall - also auch ohne den Schneideneffekt - ein Klemmen des Rotors in Rückwärtsrichtung auf. Es sei noch erwähnt, daß der Schneideneffekt, der maßgeblich für die hervorragenden Eigenschaften des Motors verantwortlich ist, in der Praxis oft erst nach einer Einlaufzeit des Motors von wenigen Minuten wirksam wird. Dies ist dadurch zu erklären, daß sich die Lamellenenden erst gegen die Reibfläche des Rotors einschleifen müssen.

Der oben beschriebene Schneideneffekt der Lamellen hat zur Folge, daß das Drehmoment des Motors in erster Näherung unabhängig von der Anpreßkraft der Lamellen gegen die Reibfläche des Rotors ist. Die Anpreßkraft kann deshalb sehr klein gemacht werden.

Nach einer weiteren Ausgestaltung der Erfindung ist vorgesehen, daß die E-Module der Reibpartner, nämlich der Lamellen und der Reibpartner, etwa gleich sind. Auf diese Weise läßt sich die Stockwirkung optimieren.

Nach einer weiteren Ausgestaltung der Erfindung ist deshalb vorgesehen, daß die Anpreßkraft der Lamellen gegen den Rotor kleiner als 5 N gewählt ist. In weiterer Ausgestaltung der Erfindung wird die Anpreßkraft der Lamellen vorzugsweise 0,5-2 N pro Lamelle sein.

Dadurch ist es möglich geworden, einen Motor mit sehr hohem Drehmoment (>1 Nm) - und gleichzeitig sehr hohem Motorwirkungsgrad zu realisieren. Der Schneideneffekt ist maßgeblich dafür verantwortlich, daß maximale Motorwirkungsgrade von über 50% erzielt werden können. Dieser Wirkungsgrad ist deutlich höher als bei den in der DE 32 13 275 C2 oder der EP 0 131 130 A2 beschriebenen Motoren und bei vergleichbaren anderen Motoren.

Nach einer weiteren Ausgestaltung der Erfindung ist vorgesehen, daß der piezoelektrische Resonator aus einer oder mehreren fest miteinander verbundenen Scheiben besteht.

Nach einer weiteren Ausgestaltung der Erfindung ist vorgesehen, daß der piezoelektrische Resonator frei schwebend auf einem Zapfen verdrehsicher gelagert ist, wobei der Zapfen im Schwingungsknoten, d.h. im Zentrum des Resonators, in den Resonator eingreift. Dies begünstigt den Wirkungsgrad und die Laufruhe des Motors.

Nach einer weiteren Ausgestaltung der Erfindung ist vorgesehen, daß die Schwingungsrichtung in an sich bekannter Weise senkrecht zur Reibfläche verläuft.

Nach einer weiteren Ausgestaltung der Erfindung ist vorgesehen, daß bei den zusammenwirkenden Reibpartnern die Lamellen aus Federstahl oder Federbronze und die Reibfläche des Rotors aus Stahl, Keramik oder Chrom besteht. Damit werden infolge einer verschleißfesten Ausgetaltung der Abrieb verringert, die Lebensdauer des Motors erhöht und die Geräusche des Motors verringert.

Nach einer weiteren Ausgestaltung der Erfindung ist vorgesehen, daß die radiale Vorspannung der elastischen Lamellen im eingebauten Zustand so groß ist, daß der Motor relativ unkritische Toleranzanforderungen stellt und der Abrieb von Reibefläche und Lamellen erst nach sehr langer Zeit zu einer wesentlichen Abnahme der Anpreßkraft der Lamellen führt. Vorteilhafterweise ist dabei die radiale Vorspannung ≧ 0,1 mm.

Nach einer weiteren Ausgestaltung der Erfindung ist vorgesehen, daß der Rotor radial außerhalb des piezoelektrischen Resonators gelagert ist, wobei das Rotorlager derart angeordnet ist, daß eine Lagerschale fest mit einem Ständeraußenring und die andere Lagerschale mit dem Rotor verbunden ist. Dadurch ist die radiale Lagerbelastung besser beherrschbar.

Nach einer weiteren Ausgestaltung der Erfindung ist vorgesehen, daß das Rotorlager aus zwei axial übereinander angeordneten Einzellagern besteht.

Die Erfindung wird anhand der Zeichnung näher erläutert. Es zeigen:
Fig. 1 einen vertikalen Schnitt durch den Motor nach der Erfindung mit Stator, Rotor, piezoelektrischem Schwingelement sowie einer glockenförmigen Rotorausbildung mit Außenlagerung,
Fig. 2 eine horizontale Schnittansicht der funktionell zusammenwirkenden Teile.

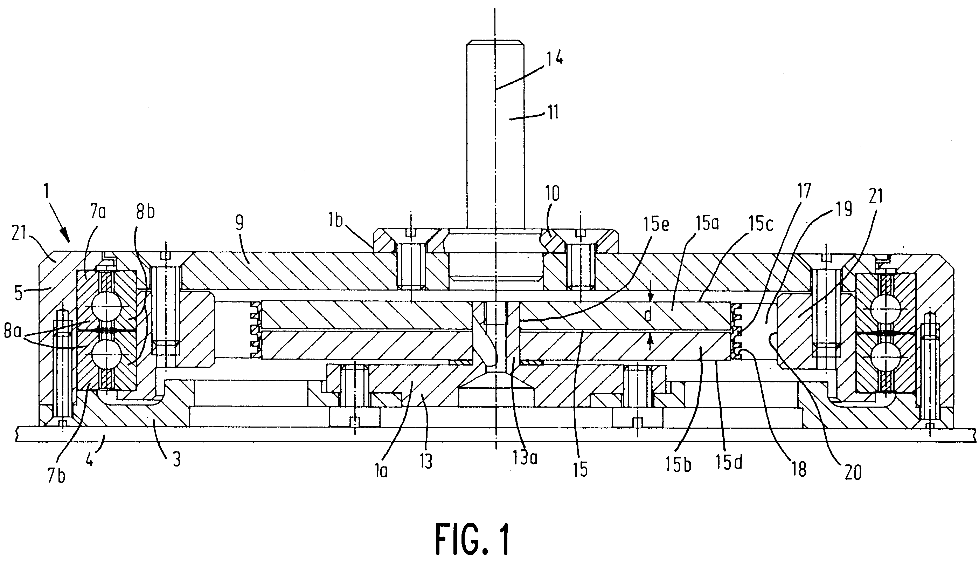

Der in Fig. 1 im Schnitt dargestellte piezoelektrische Rotationsmotor 1 mit einem Stator 1a und einem Rotor 1bweist eine Statorplatte 3 auf, die auf ein Chassis 4 oder dergl. aufgeschraubt sein kann. Die Chassisplatte 3 ist mit einem Statoraußenring 5 verbunden, der parallel übereinander und an der Außenseite des Motors gelegen axial nebeneinander angeordnete Lager 7a und 7b aufweist. Ein Deckelflansch 9 des Motors 1 ist mit einer Motorwelle 11 versehen. Der Stator 1a hat einen Statoraußenring 5, an dem äußere Lagerschalen 8a der lager 7a,7b befestigt sind.

Der Rotor 1b hat einen innerhalb des Statoraußenringes 5 umlauffähigen Rotorring 21, der innere Lagerschalen 8b der Lager 7a,7b trägt.

Die Grundplatte 3 weist zentrisch einen Träger 13 auf, der mit der Motorachse 14 fluchtend eine vierkantige Aufnahme 13a aufweist, auf der ein Piezoelement 15 angeordnet ist. Das Piezoelement 15 besteht aus zwei scheibenförmigen Elementen 15a und 15b, deren Oberseiten 15c bzw. 15d mit metallisierten Elektroden versehen sind. Beide Piezoscheiben 15a und 15b sind mittels eines geeigneten Klebers verbunden und bilden so zusammen eine Einheit, die als Resonator 15 bezeichnet wird. Zwischen die Piezoscheiben 15a und 15b ist ein metallsiches Netz geklebt. Dieses Netz wird an einer nicht dargestellten Stelle frei herausgeführt und ist mit einer Phase der elektrischen Speisung verbunden. Die zweite Phase wird an die obere und untere Elektrode angelegt.

Auf diese Weise kann der Resonator 15 elektrisch angeregt werden. Die Polungsrichtung der beiden Piezoscheiben ist axial vorgesehen und verläuft damit senkrecht zu den Elektroden und in Dickenrichtung der Scheiben. Dabei zeigt die Polungsrichtung in der einen Scheibe nach oben und in der anderen Scheibe nach unten, so daß beim Anlegen einer elektrischen Spannung zwischen den beiden Phasen das elektrische Feld in beiden Piezoscheiben gleichzeitig entweder parallel oder antiparallel zur Polrichtung steht. Der Resonator 15 kann auch aus einer oder mehr als zwei Piezoscheiben aufgebaut sein. Durch Anwendung von n miteinander fest verbundenen Piezoscheiben 15a, 15b, ... der Dicke d beträgt die erforderliche Speisespannung nur 1/N-fache der Spannung im Falle nur einer Piezoscheibe der Dicke n·d. Dies ist ein erheblicher Vorteil, da bei vielen Anwendungen eine möglichst niedrige Speisespannung erwünscht ist. Bei der elektrischen Erregung des piezoelektrischen Resonators wird der sogenannte transversale (inverse) piezoelektrische Effekt ausgenutzt, d.h. die elektrische Anregung besitzt eine Frequenz, die der ersten radialen Eigenschwingung des Resonators entspricht. Diese Schwingung ist dadurch ausgezeichnet, daß im Zentrum des Resonators ein Schwingungsknoten und am Resonatorrand ein Schwingungsbauch liegt. Die maximalen radialen Bewegungsamplituden am Rande des Resonators liegen im Bereich von 1µ.

Der Resonator 15 ist im Zentrum mit einem nicht runden, z.B. rechteckigen Loch 15e versehen. Durch dieses Loch 15e greift der Zapfen 13a der Grundplatte 3. Der Zapfen 13a ist so in das Loch 15e geklebt, daß der Resonator freischwebend über der Grundplatte angeordnet ist und nur im Bereich des Zapfens 13a eine Verbindung besteht. Durch diese freie Aufhängung des Resonators im Zentrum des Motors, also im Schwingungsknoten, wird erreicht, daß die Resonatorverluste sehr viel niedriger sind als bei anderen bekannten Anordnungen. Die Schwingungsgüten sind daher ausgesprochen hoch. Dies hat zwei wichtige Konsequenzen: Erstens wird die erforderliche Speisespannung zur Anregung des Resonators 15 weiter erniedrigt, und zweitens wird dadurch der Wirkungsgrad des Motors erhöht. Durch die feste Verbindung des Resonators mit dem zentrischen Zapfen 13a - also keine schwimmende Lagerung wie in der DE 32 13 275 C2 - wird außerdem verhindert, daß aufgrund von nicht-ausbalancierten Störkräften eine ungewollte Bewegung des Resonators 15 bezüglich des Rotors entsteht, die zu einer Laufunruhe des Motors führen würde.

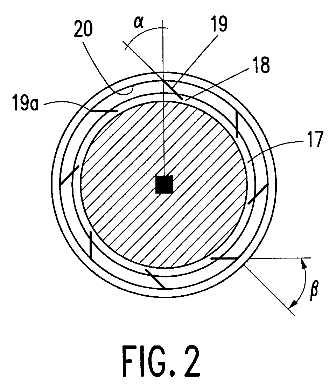

Auf den Außenrand des Resonators 15 sind eine Reihe von Trägerelementen 17 aufgebracht, die eine gewisse Anzahl von Schlitzen 18 besitzen. In diese Schlitze 18 sind blattartige elastische Lamellen 19 eingeklebt oder eingeschweißt. Die elastischen Lamellen können beispielsweise aus Federstahl bestehen. Die elastischen Lamellen 19 können eine rechteckige Form aufweisen. Wie Fig. 2 zeigt, sind die Schlitze 18 derart geneigt, daß die freien Lamellenenden 19a unter einem Winkel gegen die radiale - senkrecht auf der inneren Reibfläche 20 des Rotorringes 21 stehend - Richtung stehen.

Um eine möglichst hohes Drehmoment und einen möglichst hohen Motorwirkungsgrad zu erzielen, ist der Anstellwinkel α, der aus Fig. 2 zu ersehen ist, derart gewählt, daß er gleich oder kleiner ist als der Stockwinkel Beta, der infolge des Schneideneffektes der Lamellen zwischen 15 und 45° liegt.

Eine wesentliche Eigenschaft des Piezomotors nach der Erfindung besteht in der Tatsache, daß die elastischen Lamellen 19 an ihren freien Enden 19a, die mit der Reibfläche 20 des Rotors in Kontakt sind, sehr dünn, vorzugsweise 0,1 mm oder weniger, breit und damit also als Lamellenschneiden ausgebildet sind. Auf diese Weise wird ein, eine Stockwirkung verursachender Schneideneffekt erzeugt, der mit einer Messerschneide vergleichbar ist, die schräg gegen eine Fläche angestellt ist. Dies hat zur Folge, daß die freien Lamellenenden in der Schwingungsphase, in der sie sich im Vorwärtsrichtung bewegen, fest und ohne Schlupf an der Reibfläche 20 des Rotors angreifen. Bei der Rückwärtsbewegung der Lamellenenden 19a ist der Schneideneffekt nicht wirksam, und die Lamellen 19 können zurückschwingen, wobei sie nur durch die normale Coulomb-Reibung (F_{c}=F_{⊥}.µ) gehemmt werden. Da die Coulomb-Reibungskräfte in Rückwärtsrichtung kleiner sind als die Schneidenkräfte in Vorwärtsrichtung, entsteht eine zeitlich mittlere Nettokraft in Richtung der Neigung der Lamellen 19, die den Rotor vorwärts treibt. Aufgrund der Massenträgheit des Rotors werden die schnellen Kraftschwankungen durch die Oszillationen der Lamellen 19 geglättet, und der Rotor rotiert ruhig und gleichmäßig.

Der Schneideneffekt macht sich im passiven Zustand des Motors dadurch vorteilhaft bemerkbar, daß der Rotor trotz des Aufbringens sehr hoher Momente nicht in Rückwärtsrichtung bewegt werden kann, also klemmt. Die dafür verantwortliche Stockwirkung ist besonders wirksam, wenn die Reibpartner, nämlich die Lamellen 19 und die Reibfläche 20 etwa den gleichen Elastzitätsmodul haben. Für eine gute Dies ist auch der Fall, wenn die Lamellen 19 flacher als der Haftreibungswinkel γ gegen die Reibfläche angestellt sind. Unterhalb des Haftreibungswinkels γ tritt in jedem Fall - also auch ohne den Schneideneffekt - ein Klemmen des Rotors in der Rückwärtsrichtung auf. Es soll noch erwähnt sein, daß der Schneideneffekt, der maßgeblich für die hervorragenden Eigenschaften des Motors verantwortlich ist, in der Praxis erst nach einer Einlaufzeit des Motors von wenigen Minuten wirksam wird. Dies ist dadurch zu erklären, daß sich die Lamellenenden 19a erst gegen die Reibfläche 20 des Rotors einschleifen müssen.

Der beschriebene Schneideneffekt der Lamellen 19 hat zur Folge, daß das Drehmoment des Motors 1 in erster Näherung unabhängig ist von der Anpreßkraft der Lamellen 19 gegen die Reibfläche 20 des Rotors. Die Anpreßkraft kann deshalb sehr klein gewählt werden. Dadurch ist es möglich, einen Motor 1 mit sehr hohem Drehmoment (größer als 1 Nm) und gleichzeitig sehr hohem Motorwirkungsgrad zu realisieren. Der Schneideneffekt ist maßgeblich dafür verantwortlich, daß maximale Motorwirkungsgrade von über 50° erzielt werden können. Dieser Wirkungsgrad ist deutlich höher als bei bekannten piezoelektrischen Motoren.

## Patentansprüche

1. Elektrischer Rotationsmotor, dessen Rotor (1b) mittels Ultraschallschwingungen angetrieben wird von piezoelektrischen Schwingelementen, die mittels hochfrequenter elektrischre Schwingungen in eine Resonanzschwingung versetzt werden und diese Schwingungen auf eine Anzahl elastischer Lamellen (19) übertragen, gegen deren freie Enden eine Reibfläche (20) des Rotors gedrückt wird, wobei die einzelnen Lamellen (19) unter einem Anstellwinkel α zur Senkrechten auf dem kontaktierenden Teil der Reibfläche (20) angestellt sind, dadurch gekennzeichnet, daß der Anstellwinkel α so gewählt ist, daß in Vorschubrichtung eine Stockwirkung auftritt, bei der sich die Lamellen (19) durch einen Schneideneffekt in die Reibfläche (20) einhaken, sodaß bei der Vorschubbewegung keine Relativbewegung zwischen Lamellenschneiden (19a) und Reibfläche (20) auftritt.

2. Elektrischer Rotationsmotor nach Anspruch 1, dadurch gekennzeichnet, daß der Anstellwinkel Alpha derart gewählt ist, daß er gleich oder kleiner ist als der Stockwinkel Beta, der infolge des Schneideneffektes der Lamellen (9) zwischen 15 und 45° liegt.

3. Elektrischer Rotationsmotor nach Anspruch 1, dadurch gekennzeichnet, daß die elastischen Lamellen (19) an ihrem Ende (19a), welches mit der Reibfläche (20) des Rotors (1b) in Kontakt steht, so dünn ausgebildet ist, daß zur Erzielung der Stockwirkung ein einseitig gerichteter Schneideneffekt entsteht.

4. Elektrischer Rotationsmotor nach Anspruch 1, dadurch gekennzeichnet, daß das auf die Reibfläche (20) gerichtete Lamellenende (19a) 0,1 mm und dünner ausgebildet ist.

5. Elektrischer Rotationsmotor nach Anspruch 1, dadurch gekennzeichnet, daß die E-module der Reibpartner, nämlich der Lamellen (19) und der Reibfläche (20), etwa gleich gewählt sind.

6. Elektrischer Rotationsmotor nach Anspruch 1, dadurch gekennzeichnet, daß die Anpreßkraft der Lamellen (19) gegen den Rotor (1b) kleiner als 5 Newton pro Lamelle (19) gewählt ist.

7. Elektrischer Rotationsmotor nach Anspruch 6, dadurch gekennzeichnet, daß die Anpreßkraft der Lamellen (19) vorzugsweise 0,5-2 Newton pro Lamelle (19) gewählt ist.

8. Elektrischer Rotationsmotor nach Anspruch 1, dadurch gekennzeichnet, daß der piezoelektrische Resonator (15) aus einer oder mehreren fest miteinander verbundenen Scheiben (15a, 15b,...) besteht.

9. Elektrischer Rotationsmotor nach Anspruch 1, dadurch gekennzeichnet, daß der piezoelektrische Resonator (15) frei schwebend auf einem Zapfen (13a) verdrehsicher gelagert ist, wobei der Zapfen (13a) im Schwingungsknoten, d.h. im Zentrum des Resonators (15), in den Resonator (15) eingreift.

10. Elektrischer Rotationsmotor nach Anspruch 1, dadurch gekennzeichnet, daß die Schwingungsrichtung in an sich bekannter Weise senkrecht zur Reibfläche (20) verläuft.

11. Elektrischer Rotationsmotor nach Anspruch 5, dadurch gekennzeichnet, daß bei den zusammenwirkenden Reibpartnern die Lamellen (19) aus Federstahl oder Federbronze und die Reibfläche (20) des Rotors (20) aus Stahl, Keramik, Chrom oder Nickel besteht.

12. Elektrischer Rotationsmotor nach Anspruch 1, dadurch gekennzeichnet, daß die radiale Vorspannung der elastischen Lamellen (19) im eingebauten Zustand so groß ist, daß der Motor relativ unkritische Toleranzanforderungen stellt und der Abrieb von Reibefläche (20) und Lamellen (19) erst nach sehr langer Zeit zu einer wesentlichen Abnahme der Anpreßkraft der Lamellen (19) führt.

13. Elektrischer Rotationsmotor nach Anspruch 12, dadurch gekennzeichnet, daß die radiale Vorspannung ≧ 0,1 mm ist.

14. Elektrischer Rotationsmotor nach Anspruch 1, dadurch gekennzeichnet, daß der Rotor (1b) radial außerhalb des piezoelektrischen Resonators (15) gelagert ist, wobei eine Lagerschale (8a) fest mit einem Ständeraußenring 5 und die anderen Lagerschalen (8b) mit dem Rotor (1b) verbunden sind.

15. Elektrischer Rotationsmutor nach Anspruch 12, dadurch gekennzeichnet, daß das Rotorlager aus zwei axial übereinander angeordneten Einzellagern (7a,7b) besteht.
